Europäisches Patentamt

European Patent Office

Office européen des brevets

(19)

(11)  EP 0 751 883 B1

(12)  **EUROPÄISCHE PATENTSCHRIFT**

(45) Veröffentlichungstag und Bekanntmachung des Hinweises auf die Patenterteilung:
**29.09.1999 Patentblatt 1999/39**

(21) Anmeldenummer: **96901297.0**

(22) Anmeldetag: **18.01.1996**

(51) Int. Cl.$^6$: **B60R 22/46**, F16D 41/14, F16D 43/24

(86) Internationale Anmeldenummer:
**PCT/EP96/00191**

(87) Internationale Veröffentlichungsnummer:
**WO 96/22200 (25.07.1996 Gazette 1996/34)**

(54) **KUPPLUNG ZWISCHEN DER GURTWELLE EINES GURTAUFROLLERS UND EINEM GURTSTRAFFER-DREHANTRIEB**

COUPLING BETWEEN THE BELT SHAFT OF A BELT WINDING UNIT AND A BELT TIGHTENING ROTARY DRIVE

ACCOUPLEMENT ENTRE L'ARBRE D'UN ENROULEUR DE CEINTURE ET UN REDUCTEUR DE ROTATION DE TENDEUR DE CEINTURE

(84) Benannte Vertragsstaaten:
**DE ES FR GB IT SE**

(30) Priorität: **19.01.1995 DE 29500807 U**

(43) Veröffentlichungstag der Anmeldung:
**08.01.1997 Patentblatt 1997/02**

(73) Patentinhaber:
**TRW Occupant Restraint Systems GmbH & Co. KG**
**73551 Alfdorf (DE)**

(72) Erfinder: **FÖHL, Artur**
**D-73614 Schorndorf (DE)**

(74) Vertreter:
**Degwert, Hartmut, Dipl.-Phys. et al**
**Prinz & Partner**
**Manzingerweg 7**
**81241 München (DE)**

(56) Entgegenhaltungen:
**DE-A- 4 304 492          FR-A- 2 491 340**
**GB-A- 295 412            GB-A- 793 920**
**GB-A- 2 268 678          US-A- 4 568 037**

**Beschreibung**

Die Erfindung betrifft eine Kupplung zwischen der Gurtwelle eines Gurtaufrollers und einem Gurtstraffer-Drehantrieb, der eine Ausgangswelle aufweist.

Damit die normale Drehung der Gurtwelle des Gurtaufrollers durch den Gurtstraffer-Drehantrieb nicht behindert wird, bleibt die Gurtwelle bis zur Aktivierung des Gurtstraffer-Drehantriebs von diesem abgekoppelt. Andererseits soll die Gurtwelle nach erfolgter Gurtbandstraffung wieder frei drehbar sein, damit die normale Aufroll- und Sperrfunktion des Gurtaufrollers wiederhergestellt ist und der Fahrzeuginsasse, beispielsweise nach einem nur leichten Unfall, sich wieder angurten und zur Werkstatt fahren kann.

Unter den verschiedenen möglichen Ausführungen von Kupplungen haben Klinkenkupplungen den Vorzug, da sie leicht wieder gelöst werden können, indem die Kupplungsklinken in ihre Ausgangsstellung zurückgeschwenkt werden. Bei bekannten Kupplungen sind die Kupplungsklinken von einem innenverzahnten Kupplungsrad umgeben und werden zur Herstellung der Kupplungsverbindung nach außen verschwenkt. Es wurde bisher als günstig angesehen, den Kupplungsring radial außerhalb der Kupplungsklinken anzuordnen, da radial außen für die Zähne mehr Raum zur Verfügung steht als innen und größere Zähne bei feinerer Zahnteilung möglich sind.

Aus der GB-A-2 268 678 ist eine Kupplung zwischen der Gurtwelle eines Gurtaufrollers und einem Gurtstrafferdrehantrieb bekannt, bei dem die Gurtwelle ein außenverzahntes Kupplungsrad aufweist und eine Antriebsscheibe des Drehantriebs wenigstens eine schwenkbar gelagerte Kupplungsklinke trägt, die durch eine Rückstellfeder in einer Ruhestellung im Abstand vom Umfang des Kupplungsrades gehalten und einwärts in eine Eingriffsstellung in Eingriff mit dem Kupplungsrad verschwenkbar ist.

Die Erfindung beruht auf der Erkenntnis, daß die Kraftübertragung von einer Kupplungsklinke auf ein radial außerhalb gelegenes Kupplungsrad insofern problematisch ist, als das Kupplungsrad einer lokal konzentrierten Beanspruchung mit einer hohen radialen Komponente ausgesetzt ist. Die Umfangsbeschleunigung eines Gurtstraffer-Drehantriebs erreicht Werte in der Größenordnung von 1000 g und mehr, so daß die

Bauteile der Kupplung extrem hohen Beanspruchungen ausgesetzt sind. Diese Bauteile wurden daher stets aus mechanisch hochfesten Werkstoffen wie Stahl gefertigt. Diese Werkstoffe sind aber nicht nur aufwendig, sondern haben auch eine große Masse zur Folge, was wiederum zu großen Massenträgheitskräften führt, zu deren Überwindung eine hohe Antriebsleistung erforderlich ist.

Durch die Erfindung wird eine Kupplung zur Verfügung gestellt, deren Bauteile geringeren Beanspruchungen ausgesetzt sind, so daß sie aus einem metallischen Leichtbauwerkstoff hergestellt werden können. Gemäß der Erfindung weist der Gurtstraffer eine Antriebswelle auf, an die die Antriebsscheibe angeschlossen ist; die Kupplungsklinke ist in einem in Umfangsrichtung der Antriebsscheibe unter Last nachgiebigen Schwenklager gelagert; die Kupplungsklinke ist in der Eingriffsstellung nach dem Nachgeben des Schwenklagers an einer Stützstruktur am Umfang der Antriebsscheibe bezüglich der in Umfangsrichtung der Antriebsscheibe gerichteten Kräfte flächig abgestützt. Der Kupplungsvorgang erfolgt bei dieser Kupplung radial von außen nach innen, wobei das innenliegende Kupplungsrad überwiegend in Umfangsrichtung beansprucht wird. Die noch vorhandenen radialen Komponenten führen zu einer unproblematischen Druckbeanspruchung des Kupplungsrades von außen nach innen. Für die Bauteile der Kupplung können leichtere Werkstoffe minderer Festigkeit verwendet werden, so daß außer einer kompakten Bauform auch eine Reduzierung der Massenträgheitskräfte und eine Verminderung der benötigten Antriebsleistung erzielt wird.

Eine weitere Reduzierung der Anforderungen an die mechanische Festigkeit der Kupplungsklinke und ihrer Lagerung wird durch eine vorteilhafte Weiterbildung der Erfindung erreicht, bei welcher die Kupplungsklinke in der Eingriffsstellung an einer Stützstruktur am Umfang der Antriebsscheibe insbesondere bezüglich der in Radialrichtung der Scheibe gerichteten Kräfte flächig abgestützt ist. Diese Stützstruktur hat bei der bevorzugten Ausführungsform eine hohe mechanische Steifigkeit, da sie durch einen am Umfang der Antriebsscheibe angeformten, durchgehenden und axial vom Scheibenkörper abstehenden Ring gebildet ist.

Bei einer vorteilhaften Ausführungsform wird die bei der Aktivierung des Gurtstraffer-Drehantriebs auftretende, extrem hohe Drehbeschleunigung zur Einsteuerung der Kupplungsklinke durch ihre Massenträgheit ausgenutzt. Zu diesem Zweck ist der Schwerpunkt der Kupplungsklinke radial einwärts von ihrer Schwenkachse gelegen. Bei der bevorzugten Ausführungsform erfolgt jedoch zusätzlich eine Zwangsbewegung der Kupplungsklinke durch eine Zwangsführung, die eine Steuerkurve und ein abscherbares Kurvenfolgerelement aufweist, um zu gewährleisten, daß die Kupplungsklinke auf einem extrem kurzen Einsteuerweg von beispielsweise einer viertel bis einer halben Zahnteilung des Kupplungsrades in die Eingriffsstellung verschwenkt wird.

Weitere Vorteile und Merkmale der Erfindung ergeben sich aus der folgenden Beschreibung mehrerer Ausführungsformen der Erfindung und aus der Zeichnung, auf die Bezug genommen wird. In der Zeichnung zeigen:

Fig. 1        einen Teilschnitt einer Kupplung zwi-schen der Gurtwelle eines Gurtaufrol-ler und einem Gurtstraffer-Drehantrieb;

Fig. 2        eine Schnittansicht entlang Linie II-II in Fig. 1;

Fig. 3 bis 7   Teilansichten, die mehrere Ausführungsformen einer Kupplungsklinke mit ihrer Abstützung zeigen;

Fig. 8   ein Kräftediagramm zur Erläuterung der an der Kupplungsklinke auftretenden Stützkräfte;

Fig. 9   eine auseinandergezogene Perspektivansicht einer vorteilhaften Ausführungsform der Kupplung;

Fig. 9a   eine Ausführungsvariante dieser Kupplung;

Fig. 10   schematisch die Kupplungsklinke in Eingriffsstellung;

Fig. 11   schematisch die Kupplungsklinke in Ruhestellung;

Fig. 12   einen Schnitt entlang Linie XII-XII in Fig. 10;

Fig. 13   eine Variante der Schnittansicht nach Fig. 12; und

Fig. 14   zwei Ausführungsformen einer Steuerkurve zur Zwangsbewegung der Kupplungsklinke.

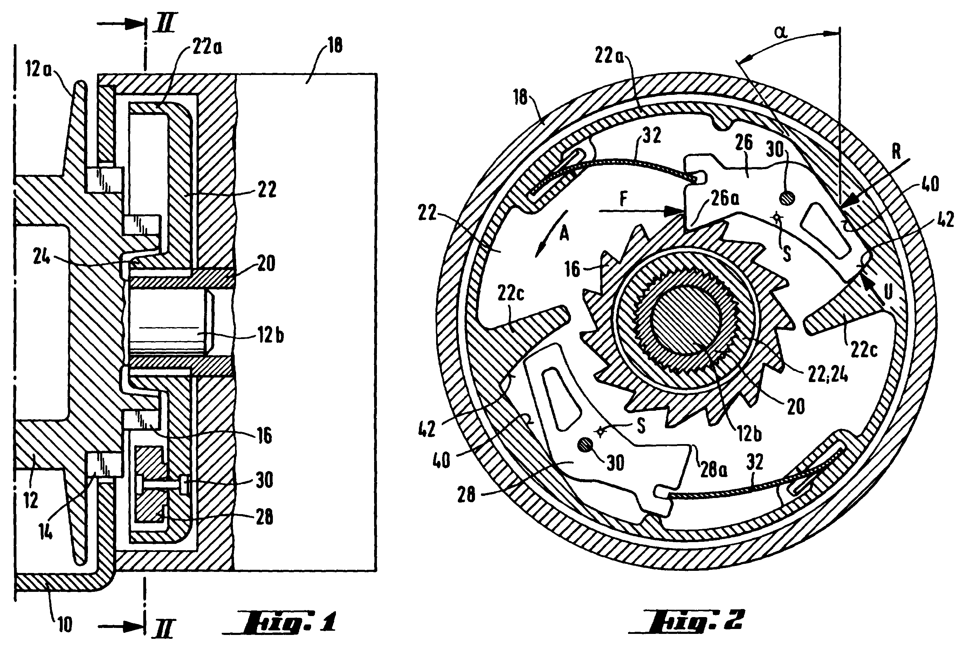

In Fig. 1 ist Von einem Gurtaufroller für Sicherheitsgurte in Fahrzeugen nur ein Teil des Gehäuses 10 und der darin drehbar gelagerten Gurtwelle 12 gezeigt. Die Gurtwelle 12 besteht in herkömmlicher Weise aus Leichtmetall und besitzt eine angeformte Sperrverzahnung 14. An die Gurtwelle 12 ist ferner ein ringförmiges, außenverzahntes Kupplungsrad 16 angeformt. Die Gurtwelle 12 mit Flanschen 12a, Sperrverzahnung 14 und angeformtem Kupplungsrad 16 wird durch ein Druckgußverfahren hergestellt.

An den in Fig. 1 gezeigten Seitenschenkel des Gehäuses 10 ist ein Gurtstraffer-Drehantrieb angesetzt, der allgemein mit 18 bezeichnet ist. Dieser Gurtstraffer-Drehantrieb 18, auf den hier nicht näher eingegangen wird, besitzt eine zur Gurtwelle 12 hin gerichtete, hohle Ausgangswelle 20, die außenseitig kerbverzahnt ist und im Inneren einen Lagerzapfen 12b der Gurtwelle 12 aufnimmt. Auf die Ausgangswelle 20 ist eine Antriebsscheibe 22 mittels einer angeformten, hülsenförmigen und innenseitig kerbverzahnten Nabe 24 formschlüssig aufgesetzt. Diese Antriebsscheibe 22 ist an ihrem Außenumfang mit einer angeformten, ringförmigen Stützstruktur 22a versehen. An der Antriebsscheibe 22 sind auf ihrer der Gurtwelle 12 zugewandten Seite zwei Kupplungsklinken 26, 28 jeweils auf einem Lagerstift 30 schwenkbar gelagert. Die Kupplungsklinken 26, 28 sind annähernd einander diametral gegenüberliegend, jedoch auf die Verzahnung des Kupplungsrades 16 bezogen um ein halbes Teilungsmaß gegeneinander versetzt angeordnet. Die Kupplungsklinken 26, 28 werden jeweils durch eine an der Stützstruktur 22a verankerte Blattfeder 32 in eine Ruhestellung beaufschlagt, in welcher ihre Klinkenspitze 26a bzw. 28a sich im radialen Abstand vom Umfang des Kupplungsrades 16 befindet. Wie aus Fig. 1 ersichtlich ist, umgibt das Kupplungsrad 16 die Habe 24 der Antriebsscheibe 22, und die ringförmige Stützstruktur 22a umgibt das Kupplungsrad 16, so daß der in Axialrichtung zur Verfügung stehende Raum gut genutzt wird.

Auch die Kupplungsklinken 26, 28 und die Antriebsscheibe 22 sind aus einem metallischen Leichtbauwerkstoff, insbesondere Leichtmetall, vorzugsweise mittels eines Druckgußverfahrens, gefertigt.

Fig. 2 zeigt die Kupplungsklinke 26 in Eingriffsstellung und die Kupplungsklinke 28 in Ruhestellung. Die Ruhestellung ist durch einen radial einwärts gerichteten Vorsprung an der Stützstruktur 22a definiert. Der Schwerpunkt S der Sperrklinken 26, 28 liegt jeweils radial einwärts von der Achse des Lagerstiftes 30. Dies hat zur Folge, daß die Kupplungsklinken 26, 28 durch die bei Aktivierung des Gurtstraffer-Drehantriebes 18 auftretende, abrupte Drehbeschleunigung der Antriebsscheibe 22 in Richtung eines Pfeiles A in Fig. 2 aufgrund von Massenträgheitskräften bestrebt sind, in ihre Eingriffsstellung verschwenkt zu werden.

Die Stützstruktur 22a bildet für jede Kupplungsklinke 26, 28 sowohl eine radiale Abstützfläche 40 als auch eine die in Umfangsrichtung wirkenden Kräfte aufnehmende Abstützfläche 42. Die beteiligten Kräfte sind in Fig. 2 eingezeichnet. Zwischen der Verzahnung des Kupplungsrades 16 und der Klinkenspitze 26a der Kupplungsklinke 26 tritt zunächst die Abstützkraft F auf, die etwa tangential zum Kupplungsrad 16 orientiert ist. Diese Kraft F führt in der Kupplungsklinke 26 zu einer radialen Komponente R und zu einer in Umfangsrichtung gerichteten Komponente U. Die Abstützfläche 42 ist an einer radial einwärts gerichteten Stützrippe 22c der Stützstruktur 22 gebildet und weist einen Radius auf, der mit dem Radius am benachbarten Ende des Hebelarms der Kupplungsklinke 26 übereinstimmt. Es ergibt sich daher eine flächige Anlage zwischen diesem Ende der Kupplungsklinke 26 und der Abstützfläche 42, um die Kraft U aufzunehmen. Die Kraft R wird von der ebenen Abstützfläche 40 aufgenommen.

Fig. 8 zeigt das Kräftediagramm der beteiligten Kräfte. Zwischen den Kräften F und R ist der Winkel $\alpha$ gebildet. Bei dieser Betrachtung der Kräfte ist die Reibung noch unberücksichtigt. Tatsächlich tritt an der Abstützfläche 40 eine Reibung auf, die der Kraftkomponente U entgegengesetzt ist, wodurch die Stützrippe 22c entlastet wird. Diese muß nur die Kraft $U' = R \cdot \sin\alpha - R \cdot \mu$ aufnehmen, worin $\mu$ der Reibungskoeffizient an der Abstützfläche 42 ist.

Wie aus Fig. 2 ersichtlich ist, bewahrt die Kupplungsklinke 28 an ihrem von der Klinkenspitze 28a abgewandten Ende einen geringen Abstand von der Zugeordneten Stützrippe 22c, um das Einschwenken der Kupplungsklinke in die Eingriffsstellung nicht zu behindern. Die Lagerstifte 30 sind in geringem Maße nachgiebig, so daß die Abstützung an den Stützrippen 22c unter erhöhter Last stattfindet.

Wenn bei Aktivierung des Gurtstraffer-Drehantriebes 18 die Antriebsscheibe 22 in Richtung des Pfeiles A beschleunigt wird, werden beide Kupplungsklinken 26, 28 durch Massenträgheitskräfte gegen das Kupplungsrad 16 verschwenkt. Durch die Versetzung der Kupplungsklinken in Umfangsrichtung ist gewährleistet, daß immer eine Klinkenspitze in eine Zahn-Lücke des Kupplungsrades eintaucht, auch wenn die andere auf einer Zahnspitze auftreffen sollte. Die Kupplungsklinken 26, 28 und ihre Abstützung sind so dimensioniert, daß jede von ihnen alleine die auftretenden Kräfte übertragen kann. Die Antriebsscheibe 22 ist nun drehfest mit dem Kupplungsrad 16 gekoppelt und nimmt über dieses die Gurtwelle 12 mit, wodurch die Straffung des Gurtbandes erfolgt. Sobald dieser Vorgang abgeschlossen ist, werden die Kupplungsklinken 26, 28 durch die Blattfedern 32 wieder in die Ruhestellung zurückgeschwenkt. Die Gurtwelle 12 ist wieder von dem Gurtstraffer-Drehantrieb 18 abgekoppelt und frei drehbar.

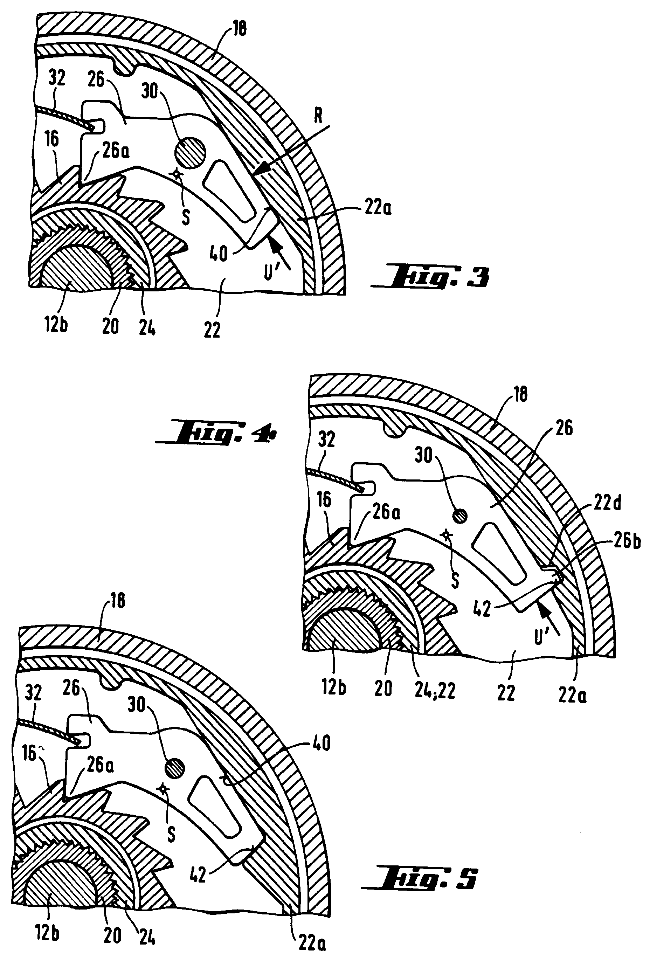

Bei der in Fig. 3 gezeigten, nicht unter den Anspruch 1 fallenden Ausführungsvariante, ist der Lagerstift 30 so dimensioniert, daß er auch die nach Abzug der Reibung verbleibenden Umfangskräfte U' aufnehmen kann. Die überwiegende Stützkraft ist die radiale Kraft R, die von der Abstützfläche 40 der Stützstruktur 22a aufgebracht wird.

Bei der Ausführungsvariante nach Fig. 4 ist an das freie Ende der Kupplungsklinke 26 ein auswärts gerichteter Nocken 26b angeformt, der in eine Kerbe 22d der Stützstruktur 22c eintaucht. Diese Kerbe b bildet eine Abstützfläche 42, welche die nach Abzug der Reibung verbleibende Umfangskraft U' aufnimmt.

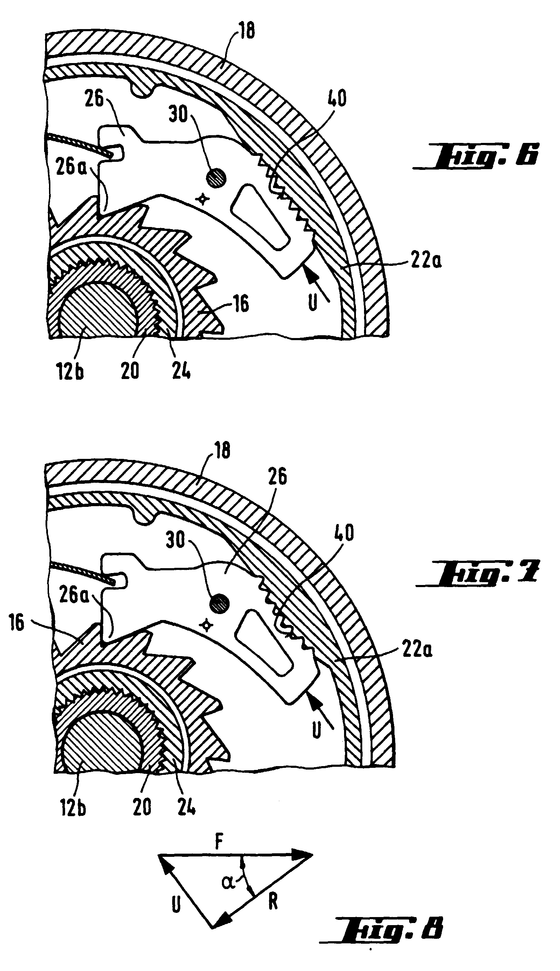

Bei der Ausführungsvariante nach Fig. 5 ist die Abstützfläche 42 nicht an einer Abstützrippe 22c, sondern an einer Stufe der Stützstruktur 22a gebildet.

Bei der Ausführungsform nach Fig. 6 sind die Stützfläche 40 an der Stützstruktur 22a und die entsprechende Gegenfläche an den Sperrklinken 26, 28 mit zueinander passenden Kerbverzahnungen versehen. Diese Kerbverzahnungen nehmen auch die Umfangskomponente U auf.

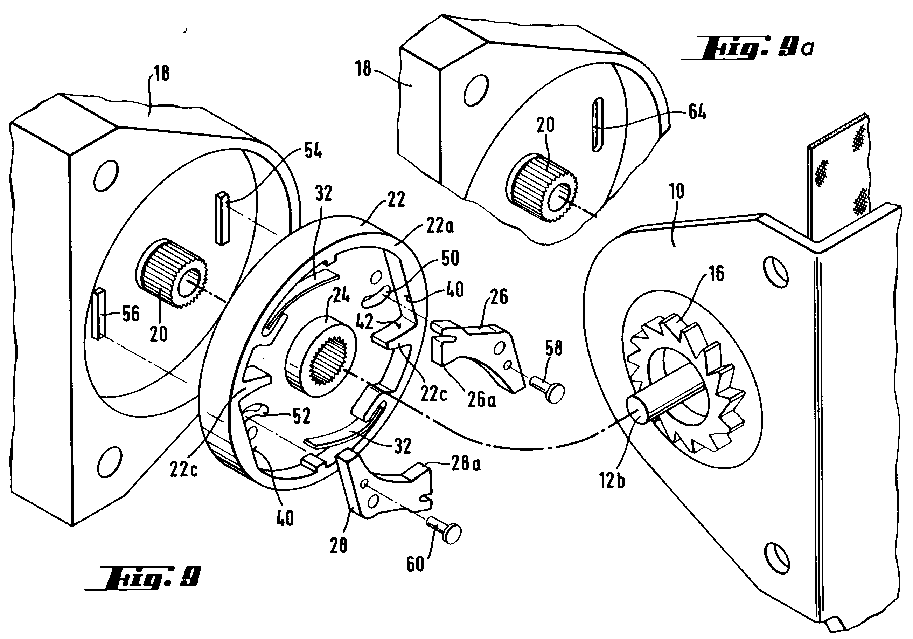

Eine Variante dieser Ausführung ist in Fig. 7 gezeigt. Statt einer Kerbverzahnung sind bogenförmige, gewellte Formschlußstrukturen vorgesehen. Diese nehmen sowohl die radiale Abstützkraft als auch die Umfangskraft U auf.

Bei allen Ausführungsformen müssen die Lagerstifte 30 im wesentlichen nur geringe Führungskräfte bei der Verschwenkung der Kupplungsklinken 26, 28 aufnehmen.

Bei den in den Fig. 9 bis 14 gezeigten Ausführungsformen erfolgt die Verschwenkung der Kupplungsklinken 26, 28 sowohl durch Hassenträgheitskräfte, als auch durch eine Zwangsführung. Durch diese Zwangsführung wird erreicht, daß die Kupplungsklinken innerhalb eines vorbestimmten Drehwinkels der Antriebsscheibe 22 aus ihrer Ruhestellung in die Eingriffsstellung verschwenkt werden. Dieser Drehwinkel beträgt vorzugsweise nur einen Bruchteil der Zahnteilung des Kupplungsrades 16, beispielsweise eine viertel bis eine halbe Zahnteilung. Auf diese Weise ist der Kupplungsvorgang bereits vollzogen, bevor die Antriebsscheibe 22 eine hohe Drehgeschwindigkeit erreicht.

Wie aus Fig. 9 ersichtlich ist, weist die Antriebsscheibe 22 nahe den Lagerstellen für die Kupplungsklinken 26, 28 zwei nierenförmige Fenster 50, 52 auf. In Gegenüberlage zu diesen Fenstern 50, 52 sind an der Stirnseite des Gurtstraffer-Drehantriebs 18 zwei starre Führungsleisten 54, 56 angebracht. In die Kupplungsklinken 26, 28 ist je ein Stift 58, 60 eingesetzt, der das entsprechende Fenster 50 bzw. 52 durchragt und an der entsprechenden Führungsleiste 54, 56 anliegt. Die Führungsleisten 54, 56 bilden eine Steuerkurve, auf der die Stifte 58, 60 bei beginnender Drehung der Antriebsscheibe 22 auflaufen, wodurch die Kupplungsklinken 26, 28 im gewünschten Sinne verschwenkt werden. Nachdem der Kupplungsvorgang vollzogen ist, werden die Stifte 58, 60 abgeschert.

Bei der in Fig. 9a gezeigten Ausführungsvariante ist statt der Führungsleisten 54, 56 eine Nut 64 vorgesehen, die aber ebenfalls eine Steuerkurve für den entsprechenden, in sie hineinragenden Stift 58 bildet.

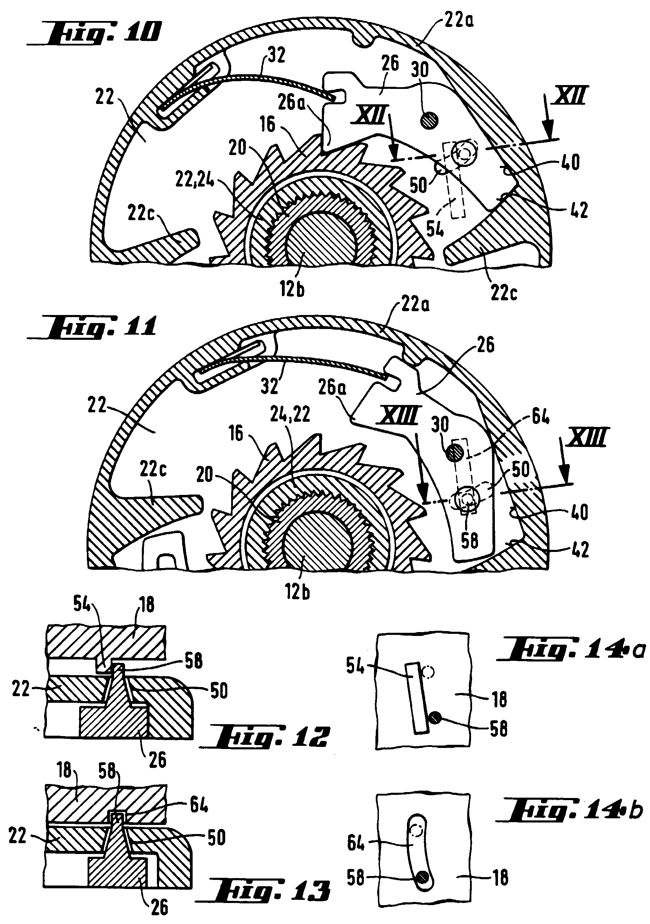

Die Fig. 10 und 12 zeigen die Ausführungsform nach Fig. 9, während die Fig. 11 und 13 die Ausführungsform nach Fig. 9a zeigen.

Die durch die Führungsleisten 54, 56 bzw. die Nut 64 gebildete Steuerkurve muß nicht geradlinig sein; vielmehr kann sie, wie in Fig. 14 gezeigt, auch gekrümmt sein, um die Verschwenkungsbewegung der Kupplungsklinken 26, 28 zu optimieren.

**Patentansprüche**

1. Kupplung zwischen der Gurtwelle eines Gurtaufrollers und einem Gurtstraffer-Drehantrieb (18), wobei die Gurtwelle (12) ein außenverzahntes Kupplungsrad (16) aufweist und eine Antriebsscheibe (22) wenigstens eine schwenkbar gelagerte Kupplungsklinke (26, 28) trägt, die durch eine Rückstellfeder (32) in einer Ruhestellung im Abstand vom Umfang des Kupplungsrades (16) gehalten und einwärts in eine Eingriffsstellung in Eingriff mit dem Kupplungsrad (16) verschwenkbar ist, dadurch gekennzeichnet, daß der Gurtstraffer-Drehantrieb (18) eine Ausgangswelle (20) aufweist, an die die Antriebsscheibe (22) angeschlossen ist und daß die Kupplungsklinke (26, 28) in einem in Umfangsrichtung der Antriebsscheibe (22) unter Last nachgiebigen Schwenklager (30) gelagert ist, wobei die Kupplungsklinke (26, 28) in der Eingriffsstellung nach dem Nachgeben des Schwenklagers (30) an einer Stützstruktur (22a) am Umfang der Antriebsscheibe (22) bezüglich der in Umfangsrichtung der Antriebsscheibe (22) gerichteten Kräfte (U) flächig abgestützt ist.

2. Kupplung nach Anspruch 1, dadurch gekennzeichnet, daß die Kupplungsklinke (26, 28) in der Eingriffsstellung an einer Stützstruktur (22a) am Umfang der Antriebsscheibe (22) bezüglich der in Radialrichtung der Antriebsscheibe gerichteten Kräfte (R) flächig abgestützt ist.

3. Kupplung nach Anspruch 1 oder 2, dadurch gekennzeichnet, daß die Stützstruktur (22a) durch einen am Umfang der Antriebsscheibe (22) angeformten, durchgehenden und axial vom Scheibenkörper abstehenden Ring gebildet ist.

4. Kupplung nach einem der Ansprüche 1 bis 3, dadurch gekennzeichnet, daß die Gurtwelle (12) mit angeformtem Kupplungsrad (16) aus einem metallischen Leichtbauwerkstoff gefertigt ist.

5. Kupplung nach einem der Ansprüche 1 bis 4, dadurch gekennzeichnet, daß die Antriebsscheibe (22) aus einem metallischen Leichbauwerkstoff gefertigt ist.

6. Kupplung nach einem der Ansprüche 1 bis 5, dadurch gekennzeichnet, daß die Kupplungsklinke (26, 28) aus einem metallischen Leichtbauwerkstoff gefertigt ist.

7. Kupplung nach einem der Ansprüche 1 bis 6, dadurch gekennzeichnet, daß die Antriebsscheibe (22) eine angeformte zylindrische Nabe (24) aufweist, die formschlüssig auf ein Ende der Ausgangswelle (20) aufgeschoben ist, und daß die Nabe (24) in radialem Abstand von dem ringförmig ausgebildeten Kupplungsrad (16) umgeben ist.

8. Kupplung nach einem der Ansprüche 1 bis 7, dadurch gekennzeichnet, daß der Schwerpunkt (S) der Kupplungsklinke (26, 28) radial einwärts von ihrer Schwenkachse gelegen ist.

9. Kupplung nach einem der Ansprüche 1 bis 8, dadurch gekennzeichnet, daß die Kupplungsklinke (26, 28) durch eine Zwangsführung, die eine Steuerkurve (54, 56; 64) und ein abscherbares Kurvenfolgerelement (58, 60) aufweist, in die Eingriffsstellung verschwenkbar ist.

10. Kupplung nach einem der Ansprüche 1 bis 9, dadurch gekennzeichnet, daß an der Antriebsscheibe (22) zwei gleiche Kupplungsklinken (26, 28) annähernd diametral einander gegenüberliegend, jedoch auf die Zahnteilung des Kupplungsrades (16) bezogen, gegeneinander in Umfangsrichtung versetzt angeordnet sind.

**Claims**

1. A coupling between the belt drum of a belt retractor and a belt pretensioner rotary drive (18), the belt drum (12) having an externally toothed coupling wheel (16), and a drive disk (22) carrying at least one pivotally mounted coupling pawl (26, 28) which is held in a neutral position clear of the periphery of the coupling wheel (16) by a return spring (32) and is able to be pivoted inwards into an engagement position in engagement with the coupling wheel (16), characterized in that the belt pretensioner rotary drive (18) has an output shaft (20) to which the drive disk (22) is connected, and that the coupling pawl (26, 28) is mounted in a pivot bearing (30) adapted to yield under load in the peripheral direction of the drive disk (22), the coupling pawl (26, 28), in the engagement position after the yielding of the pivot bearing (30), being supported across an area on a support structure (22a) on the periphery of the drive disk (22) with respect to the forces (U) directed in the peripheral direction of the drive disk (22).

2. The coupling as claimed in claim 1, characterized in that in the engagement position the coupling pawl (26, 28) is supported across an area on a support structure (22a) on the periphery of the drive disk (22) with respect to the forces (R) directed in the radial direction of the drive disk.

3. The coupling as claimed in claim 1 or 2, characterized in that the support structure (22a) is constituted by a continuous ring integrally formed on the periphery of the drive disk (22) and extending axially from the disk body.

4. The coupling as claimed in any one of the claims 1 to 3, characterized in that the belt drum (12) with the integrally molded coupling wheel (16) is manufactured of a metallic lightweight material.

5. The coupling as claimed in any one of the claims 1 to 4, characterized in that the drive disk (22) is manufactured of a metallic lightweight material.

6. The coupling as claimed in any one of the claims 1 to 5, characterized in that the coupling pawl (26, 28) is manufactured of a metallic lightweight material.

7. The coupling as claimed in any one of the claims 1 to 6, characterized in that the drive disk (22) has an integrally molded, cylindrical hub (24), which is slipped on an end of the output shaft (20) in an interlocking fashion, and that the hub (24) is surrounded with radial clearance by the annularly formed coupling wheel (16).

8. The coupling as claimed in any one of the claims 1 to 7, characterized in that the center of gravity (S) of the coupling pawl (26, 28) is located radially inwards from its pivot axis.

9. The coupling as claimed in any one of the claims 1 to 8, characterized in that the coupling pawl (26, 28) is adapted to be pivoted into the engagement position by means of a positive guide comprising a cam (54, 56; 64) and a cam follower element (58, 60) which is adapted to be shorn off.

10. The coupling as claimed in any one of the claims 1 to 9, characterized in that on the drive disk (22) two identical coupling pawls (26, 28) are arranged approximately diametrically opposite to one another but peripherally offset in relation to each other as related to the tooth pitch of the coupling wheel (16).

**Revendications**

1. Moyen d'accouplement entre l'arbre de ceinture d'un enrouleur de ceinture et un moyen d'entraînement en rotation de tendeur de ceinture (18), l'arbre de ceinture (12) comportant une roue d'accouplement (16) à denture extérieure et un disque d'entraînement (22) portant au moins un cliquet d'accouplement monté pivotant (26, 28) qui est maintenu par un ressort de rappel (32) dans une position de repos à distance de la périphérie de la roue d'accouplement (16) et peut pivoter vers l'intérieur dans une position d'engagement en prise avec la roue d'accouplement (16), caractérisé en ce que le moyen d'entraînement en rotation (18) comporte un arbre de sortie (20) auquel est relié le disque d'entraînement (22), et en ce que le cliquet d'accouplement (26, 28) est monté dans un palier pivotant (30) qui, sous la charge, s'efface dans le sens circonférentiel du disque d'entraînement (22), le cliquet d'accouplement (26, 28), en position d'engagement, reposant à plat, après l'effacement du palier pivotant (30), sur une structure d'appui (22a) située à la périphérie du disque d'entraînement (22) par rapport aux forces (U) dirigées dans le sens circonférentiel du disque d'entraînement (22).

2. Moyen d'accouplement selon la revendication 1, caractérisé en ce qu'en position d'engagement le cliquet d'accouplement (26, 28) repose à plat sur une structure d'appui (22a) située à la périphérie du disque d'entraînement (22) par rapport aux forces (R) dirigées dans le sens radial du disque d'entraînement.

3. Moyen d'accouplement selon la revendication 1 ou 2, caractérisé en ce que la structure d'appui (22a) est formée par un anneau moulé à la périphérie du disque d'entraînement (22), continu et dépassant axialement du corps du disque.

4. Moyen d'accouplement selon l'une des revendications 1 à 3, caractérisé en ce que l'arbre de ceinture (12) associé à la roue d'accouplement moulée (16) est fabriqué en matériau métallique léger.

5. Moyen d'accouplement selon l'une des revendications 1 à 4, caractérisé en ce que le disque d'entraînement (22) est fabriqué en matériau métallique léger.

6. Moyen d'accouplement selon l'une des revendications 1 à 5, caractérisé en ce que le cliquet d'accouplement (26, 28) est fabriqué en matériau métallique léger.

7. Moyen d'accouplement selon l'une des revendications 1 à 6, caractérisé en ce que le disque d'entraînement (22) comporte un moyeu cylindrique moulé (24) qui est emmanché par complémentarité de formes sur l'une des extrémités de l'arbre de sortie (20), et en ce que le moyeu (24) est entouré, à distance radiale, par la roue d'accouplement de forme annulaire (16).

8. Moyen d'accouplement selon l'une des revendications 1 à 7, caractérisé en ce que le centre de gravité (S) du cliquet d'accouplement (26, 28) est situé radialement à l'intérieur de son axe de pivotement.

9. Moyen d'accouplement selon l'une des revendications 1 à 8, caractérisé en ce que le cliquet d'accouplement (26, 28) peut être basculé en position d'engagement par un moyen de guidage forcé qui comporte une came de commande (54, 56 ; 64) et un élément cisaillable suiveur de came (58, 60).

10. Moyen d'accouplement selon l'une des revendications 1 à 9, caractérisé en ce que, sur le disque d'entraînement (22), deux cliquets d'accouplement identiques (26, 28) sont disposés de manière sensiblement diamétralement opposée, mais avec un décalage mutuel dans le sens circonférentiel par rapport au pas de la denture de la roue d'accouplement (16).

Fig. 2

Fig. 1

**Fig. 3**

**Fig. 4**

**Fig. 5**

**Fig. 6**

**Fig. 7**

**Fig. 8**

Fig. 9a

Fig. 9

Fig. 10

Fig. 11

Fig. 12

Fig. 13

Fig. 14·a

Fig. 14·b